# EUROPÄISCHE PATENTSCHRIFT

(11) **EP 2 146 797 B1**
(45) Veröffentlichungstag und Bekanntmachung des Hinweises auf die Patenterteilung: **08.12.2010**
(21) Anmeldenummer: 08749215.3
(22) Anmeldetag: 29.04.2008
(51) Int. Cl.: B01F 17/00, C08L 33/14, C08L 51/08, C08L 53/00, C08L 71/02, C09D 17/00, C09D 7/02

(54) **PIGMENTPRÄPARATIONEN AUF WASSERBASIS**
WATER-BASED PIGMENT PREPARATIONS
PRÉPARATIONS DE PIGMENTS À BASE D'EAU

(30) Priorität: 10.05.2007 DE 102007021867
(43) Veröffentlichungstag der Anmeldung: 27.01.2010
(73) Patentinhaber: Clariant Finance (BVI) Limited, Road Town, Tortola (VG)
(72) Erfinder: FECHNER, Björn, 65817 Eppstein (DE); SCHAEFER, Carsten, 84453 Mühldorf am Inn (DE); WÖRNDLE, Alexander, 60313 Frankfurt am Main (DE)
(74) Vertreter: Hütter, Klaus
(86) Internationale Anmeldenummer: PCT/EP2008/003454
(87) Internationale Veröffentlichungsnummer: WO 2008/138484

(56) Entgegenhaltungen:
- EP-A- 0 458 245
- EP-A- 0 567 214
- EP-A- 1 721 941
- WO-A-02/051948
- US-A- 5 484 851
- DATABASE CA [Online] CHEMICAL ABSTRACTS SERVICE, COLUMBUS, OHIO, US; 22. März 2007 (2007-03-22), YASUI, KENGO ET AL: "Aqueous pigment dispersions and water-thinned inks for ink-jet recording with excellent gloss" XP002492659 gefunden im STN Database accession no. 2007:326494 -& JP 2007 070567 A (DAINIPPON INK AND CHEMICALS, INC., JAPAN) 22. März 2007 (2007-03-22)

## Beschreibung

Gegenstand der vorliegenden Erfindung sind wässrige Pigmentpräparationen enthaltend neuartige anionische Polymere als Dispergiermittel, sowie ihre Verwendung zum Einfärben von natürlichen und synthetischen Materialien.

Für die Dispergierung von Pigmenten im flüssigen Medium sind üblicherweise Dispergiermittel notwendig. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden.

Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier und Papierpulpe, Kartonagen, Textilien und deren Oberflächen.

Im Stand der Technik sind auch Pigmentpräparationen beschrieben, die geordnete Polymerstrukturen enthalten. Beispiele dafür sind EP 1 293 523, WO 02051948, DE 10 2005 012 315 und EP 1 721 941.

Bislang ist es jedoch nicht gelungen, die in der Vergangenheit verwendeten anionischen Novolakdispergiermittel in ihrer Performance zu ersetzen, ohne Nachteile in Kauf nehmen zu müssen. Die früher gebräuchlichen Novolakdispergiermittel enthalten als Folge ihrer Herstellung Reste von Alkylphenolen, häufig Nonylphenol, und deren Ethoxylaten. Da Alkylphenolethoxylate bzw. deren Abbauprodukte in der Umwelt kaum abgebaut werden, reichern sie sich an. Dies ist problematisch, da sie auf Wasserorganismen eine hormonelle Wirkung zeigen. Daher wurden in vielen Ländern Rechtsvorschriften erlassen (z. B. 2003/53/EC), die den Einsatz von Stoffen, die Alkylphenole bzw. ihre Ethoxylate enthalten, in offenen Stoffkreisläufen beschränken bzw. verbieten.

Bisherige Untersuchungen haben gezeigt, dass es nach wie vor außerordentlich schwierig ist, Dispergiermittel zu synthetisieren, die anionischen Novolaksystemen äquivalent sind. Gefordert sind demnach neue Dispergiermittel, die organische Pigmente in hoher Konzentration von über 40 % niederviskos dispergieren können. Die Dispersionen müssen leicht herstellbar sein, d. h. die Pigmente müssen leicht benetzbar und leicht ins wässrige Medium einarbeitbar sein. Die Dispersion muss eine hohe und reproduzierbare Farbstärke aufweisen, die über einen Zeitraum von mehreren Jahren stabil erhalten bleibt. Ebenfalls sollten alle weiteren coloristischen Parameter wie z. B. der Bunttonwinkel und die Reinheit reproduzierbar und stabil sein. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d. h. es darf sich unter Scherung die Farbstärke oder Coloristik nicht signifikant ändern.

Überraschenderweise wurde gefunden, dass spezielle anionische Copolymere, die mit Hilfe von Makromonomeren aus Polyethylen/Polypropylen-glykol-Mono(meth)acrylsäureestern hergestellt werden, die gestellte Aufgabe erfüllen und nichtionische Novolaksysteme in ihrer Performance als Dispergiermittel ersetzen können.

Gegenstand der vorliegenden Erfindung sind wässrige Pigmentpräparationen, enthaltend
(A) mindestens ein organisches und/oder anorganisches Pigment,
(B) ein Dispergiermittel der Formel (I) oder (II), oder Mischungen der Dispergiermittel der Formeln (I) und (II), 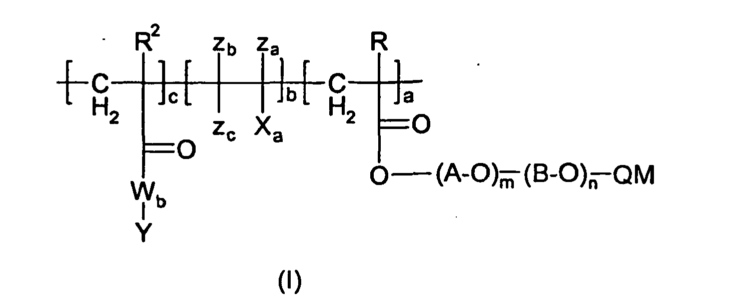 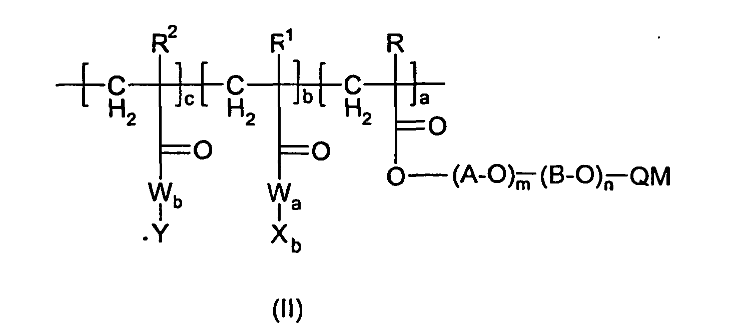 wobei
   die Indices a, b und c den molaren Anteil des jeweiligen Monomeren angeben
   a = 0,01 - 0,8
   b = 0,001 - 0,8
   c = 0,001 - 0,8
   wobei die Summe aus a + b + c gleich 1 ist und besonders bevorzugt
   a = 0,1 - 0,7
   b = 0,1 - 0,6
   c = 0,1 0,6
   wobei die Summe aus a + b + c gleich 1 ist,
   - A: für C₂-C₄-Alkylen und

   - B: für ein von A unterschiedliches C₂-C₄-Alkylen steht,
   und wobei die Alkylenoxideineiten (A-O)ₘ und (B-O)ₙ blockartig angeordnet sind,
   wobei in Komponente (B) (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen,
   - R: für Wasserstoff oder Methyl steht,
   - m: eine Zahl von 1 bis 500, vorzugweise 1 bis 50, ist;
   - n: eine Zahl von 1 bis 500, vorzgusweise von 1 bis 50, ist;
   wobei die Summe m+ n gleich 2 bis 1.000 ist;

   - Xₐ: für einen aromatischen oder araliphatischen Rest mit 3 bis 30 C-Atomen steht, der gegebenenfalls eines oder mehrere der Heteroatome N, O und S enthält,
   - Zₐ: für H oder (C₁-C₄)-Alkyl steht,
   - Z_{b}: für H oder (C₁-C₄)-Alkyl steht,
   - Z_{c}: für H oder (C₁-C₄)-Alkyl steht;
   - R¹: für Wasserstoff oder Methyl steht,
   - X_{b}: für einen aromatischen oder araliphatischen Rest mit 3 bis 30 C-Atomen steht, der gegebenenfalls eines oder mehrere der Heteroatome N, O und S enthält,
   - Wₐ: für Sauerstoff oder die Gruppe NH steht,
   - R²: für Wasserstoff oder Methyl steht,
   - Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann und auch ungesättigt sein kann,
   - W_{b}: für Sauerstoff oder die Gruppe NH steht;
   - Q: für SO₃, CH₂COO steht;
   oder QM bedeutet: 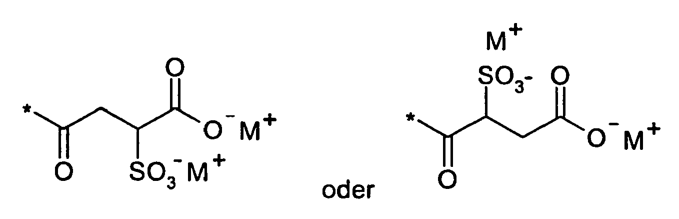 wobei
   - M: für H, ein einwertiges Metallkation, ein zweiwertiges Metallkation, NH₄⁺, ein sekundäres, tertiäres oder quartäres Ammoniumion, oder eine Kombination davon, oder für Äquivalente von zwei-, drei- oder mehrwertigen Metallionen wie beispielsweise Ca²⁺ oder Al³⁺ (der Stern * gibt in der Markush-Formel an, dass an dieser Stelle eine Verknüpfung zum Polymer besteht) steht;

   (C) gegebenenfalls Benetzer,
   (D) gegebenenfalls weitere Tenside und/oder Dispergiermittel,
   (E) gegebenenfalls ein oder mehrere organische Lösemittel und/oder eine oder mehrere hydrotrope Substanzen,
   (F) gegebenenfalls weitere zur Herstellung wässriger Pigmentdispersionen übliche Zusatzstoffe, und
   (G) Wasser.
      Bevorzugte Pigmentpräparationen enthalten 5 bis 80 Gew.-%, beispielsweise 10 bis 70 Gew.-%, an Komponente (A).
      Bevorzugte Pigmentpräparationen enthalten 0,1 bis 30 Gew.-%, beispielsweise 2 bis 15 Gew.-%, an Komponente (B).
      Besonders bevorzugte Pigmentpräparationen enthalten an Komponente
   (A) 5 bis 80 Gew.-%, beispielsweise 10 bis 70 Gew.-%,
   (B) 0,1 bis 30 Gew.-%, beispielsweise 2 bis 15 Gew.-%,
   (C) 0 bis 10 Gew.-%, beispielsweise 0,1 bis 5 Gew.-%,
   (D) 0 bis 20 Gew.-%, beispielsweise 1 bis 10 Gew.-%,
   (E) 0 bis 30 Gew.-%, beispielsweise 5 bis 20 Gew.-%,
   (F) 0 bis 20 Gew.-%, beispielsweise 0,1 bis 5 Gew.-%,
   (G) Rest Wasser,
jeweils bezogen auf das Gesamtgewicht (100 Gew.-%) der Pigmentpräparation.

Im Falle dass eine oder mehrere der Komponenten (C), (D), (E) und (F) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der Pigmentpräparation.

Die Komponente (A) der erfindungsgemäßen Pigmentpräparation ist ein feinteiliges organisches oder anorganisches Pigment oder ein Gemisch verschiedener organischer und/oder anorganischer Pigmente. Die Komponente (A) kann auch ein Farbstoff sein, der in bestimmten Lösemitteln löslich ist und in anderen Lösemitteln Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Von den genannten organischen Pigmenten sind diejenigen besonders geeignet, die für die Herstellung der Präparationen möglichst feinteilig sind, wobei bevorzugt 95 % und besonders bevorzugt 99 % der Pigmentpartikel eine Teilchengröße ≤ 500 nm besitzen.

Als beispielhafte Auswahl besonders bevorzugter organischer Pigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment

Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen. Ferner eignen sich verlackte Farbstoffe wie Ca-, Mg-, Al-Lacke von sulfonsäure- und/oder carbonsäuregruppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Anstelle von Pigmentdispersionen lassen sich auch Dispersionen herstellen, die als Feststoffe beispielsweise natürliche feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Als Komponente (B) werden neuartige spezielle anionische Copolymere als Dispergiermittel eingesetzt. Die Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Diese Polymere werden durch radikalische Polymerisation von Monomeren entsprechend den in den Klammern [ ]_{c}, [ ]_{b} und [ ]ₐ beschriebenen Resten in Formel (I) oder (II) hergestellt. Im Anschluss an die Polymerisation wird das so erhaltene nichtionische Polymer zu anionischen Funktionalitäten umgesetzt. Anionische Funktionalitäten sind beispielsweise SO₃M, CH₂COOM, PO₃M₂ oder Sulfosuccinat.

Das Herstellungsverfahren ist in der deutschen Patentanmeldung DE 10 2007 021 869 beschrieben.

In der Komponente (B) steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 98 %, insbesondere 60 bis 95 %, besonders bevorzugt 70 bis 95 %, bezogen auf die Summe der Ethylenoxid- und Propylenoxid-Einheiten, beträgt.

Die Summe der Alkylenoxydeinheiten kann prinzipiell n + m = 2 bis 1.000 sein, bevorzugt ist 2 bis 500, insbesondere 2 bis 100, besonders bevorzugt 5 bis 100. Eine wesentliche Eigenschaft, die die erfindungsgemäßen Polymere auszeichnet, ist, dass es sich bei den Polyalkylenglykol-Seitenketten des Polymers nicht um reine Polyethylenglykole oder Polypropylenglykole handelt. Stattdessen sind die Polyalkylenglykole blockartige Polyalkylenglykole aus Propylenoxid- und Ethylenoxid-Einheiten. Erst die Feinabstimmung dieses EO/PO-Verhältnisses ermöglicht polymere Dispergiermittel, die zum Herstellen von hochkonzentrierten Pigmentdispersionen mit niedriger Viskosität geeignet sind. Durch die optimierten Verhältnisse des EO/PO-Anteils im Monomer [ ]ₐ in Kombination mit den aromatischen und aliphatischen Monomeren [ ]_{b} und [ ]_{c} gelingt es, die Eigenschaften von novolakartigen Dispergiermitteln so nachzubilden, dass ein sehr ähnliches Eigenschaftsprofil erhalten wird.

Zu den Monomeren der Gruppe [ ]_{b} der Komponente (B) gehören beispielsweise die folgenden Ester und Amide der Acrylsäure und Methacrylsäure: Phenyl, Benzyl, Tolyl, 2-Phenoxyethyl, Phenethyl. Weitere Monomere können vinylaromatische Monomere wie Styrol und seine Derivate sein, wie beispielsweise Vinyltoluol, α-Methylstyrol. Bei der aromatischen Einheit kann es sich auch um Heteroaromaten handeln, wie z. B. in 1-Vinylimidazol.

Besonders bevorzugte Monomere der Gruppe [ ]_{b} können sein: Styrol, 1-Vinylimidazol, Benzylmethacrylat, 2-Phenoxyethylmethacrylat und Phenethylmethacrylat.

Zu den Monomeren der Gruppe [ ]_{c} der Komponente (B) gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Oktyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl-.

Bevorzugte Monomere der Gruppe [ ]_{c} der Komponente (B) sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl-, besonders bevorzugt 2-Ethylhexyl- und Lauryl-. ,

Im Fall der Sulfosuccinate der Komponente (B) werden die nichtionischen Copolymere beispielsweise zunächst mit Maleinsäureanhydrid verestert. Anschließend wird der erhaltene Maleinsäuremonoester sulfoniert. Hierzu wird dieser beispielsweise in einer wässrigen Lösung mit Natriumsulfit oder Natriumpyrosulfit umgesetzt.

Die Sulfatester der Komponente (B) werden beispielsweise durch Umsetzung der nichtionischen Copolymere mit Amidosulfonsäure hergestellt.

Durch Carboxymethylierung, beispielsweise mit Natriumchloracetat, können die terminalen Hydroxyfunktionen in die entsprechenden Polyethercarboxylate, Komponente (B), überführt werden.

Als Komponente (C) werden beispielsweise kationische, anionische, amphotere oder nicht ionogene Verbindungen verwendet, die die Pigmentbenetzung fördern (Netzmittel, Benetzter).

Als Komponente (D) der erfindungsgemäßen Pigmentpräparationen dienen übliche, zur Herstellung wässriger Pigmentdispersionen geeignete Dispergiermittel und Tenside oder Gemische solcher Substanzen. Üblicherweise werden anionische, kationische, amphotere oder nichtionische grenzflächenaktive Verbindungen hierfür verwendet. Besonders bewährt haben sich darunter Dispergiermittel, die eine oder mehrere mittel- oder langkettige Kohlenwasserstoffketten besitzen, zum Teil auch solche, die über aromatische Ringgruppen verfügen. Von der Vielzahl der Verbindungen soll an dieser Stelle nur eine Auswahl angeführt werden, ohne jedoch die Anwendbarkeit der erfindungsgemäßen Verbindungen auf diese Beispiele einzuschränken. Beispiele sind Alkylsulfate wie z.B. Laurylsulfat, Stearylsulfat oder Octadecylsulfat, primäre Alkylsulfonate wie z.B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso alle Salze dieser Verbindungen. Ferner eignet sich Sojalecithin oder es werden Kondensationsprodukte aus Fettsäure und Taurin oder Hydroxyethansulfonsäure verwendet, ebenso Alkoxylierungsprodukte von Alkylphenolen, Rizinusölkolophoniumestern, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosporsäureester, sowie deren Salze, den Sulfonaten, Sulfaten oder Phosphaten. Auch sind oxalkylierte Additionsverbindungen, die durch Umsetzung von Polyepoxiden mit Aminen oder Bisphenol-A bzw. Bisphenol-A-Derivaten mit Aminen erhalten werden, geeignet, in ähnlicher Weise auch Harnstoffderivate.

Ebenso eignen sich nichtionische alkoxylierte Styrol-Phenol-Kondensate, die durch Anlagerung von gegebenenfalls substituierten Styrolen an gegebenenfalls substituierten Phenolen und Umsetzung mit Ethylenoxid und/oder Propylenoxid erhalten werden, ebenso deren ionisch modifizierten Derivate, beispielsweise als Sulfonsäure-, Schwefelsäure- und Phosphorsäureester, sowie deren Salze, den Sulfonaten, Sulfaten oder Phosphaten. Zudem eignen sich als grenzflächenaktive Verbindungen auch Ligninsulfonate und Polykondensate aus Naphthalinsulfonsäure und Formaldehyd bzw. auch aus Alkylarylsulfonsäuren, Halogenarylsulfonsäure, sulfonierten Phenolen oder sulfonierten Naphtholen mit Formaldehyd.

Der Komponente (E) entsprechen organische Lösemittel oder wasserlösliche hydrotrope Substanzen. Hydrotrope Verbindungen, die gegebenenfalls auch als Lösemittel dienen, oder oligomerer oder polymerer Natur sind, sind beispielsweise Formamid, Harnstoff, Tetramethylharnstoff, ε-Caprolactam, Ethylenglykol, Propylenglykol, Diethylenglykol, Triethylenglykol, Polyethylenglykol, α-Methyl-ωhydroxy-polyethylenglykolether, Dimethylpolyethylenglykolether, Dipropylenglykol, Polypropylenglykol, Dimethylpolypropylenglykolether, Copolymere aus Ethylen- und Propylenglykol, Butylglykol, Methylcellulose, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat, Cellulosederivate, Gelatinederivate, Polyvinylpyrrolidon, Polyvinylalkohol, Polyvinylimidazol und Co- und Terpolymere aus Vinylpyrrolidon, Vinylacetat und Vinylimidazol, wobei anschließend die Polymere mit Vinylacetatbausteinen einer Verseifung zum Vinylalkohol unterzogen werden können.

Als Komponente (F) werden beispielsweise Verdicker, Konservierungsmittel, Viskositätsstabilisatoren, Mahlhilfsmittel und Füllstoffe eingesetzt. Weitere übliche Zusatzstoffe können Antiabsetzmittel, Lichtschutzmittel, Antioxidantien, Entgaser/Entschäumer, schaumreduzierende Mittel sein, Antibackmittel sowie Additive, welche die Viskosität und Rheologie günstig beeinflussen. Als Mittel zur Regulierung der Viskosität kommen z. B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak. Der Komponente (F) können auch Fette und Öle pflanzlicher und tierischer Herkunft entsprechen, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z. B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der Pigmentpräparationen benutztes Wasser, Komponente (G), wird vorzugsweise in Form von entsalztem oder destilliertem Wasser eingesetzt. Auch Trinkwasser (Leitungswasser) und/oder Wasser natürlichen Ursprungs kann verwendet werden.

Gegenstand der vorliegenden Erfindung ist auch ein Verfahren zur Herstellung der erfindungsgemäßen Pigmentpräparationen, dadurch gekennzeichnet, dass man die Komponente (A) in Form von Pulver, Granulat oder wässrigem Presskuchen in Gegenwart von Wasser (G) sowie den Komponenten (B) und gegebenenfalls (C) und (D) dispergiert, anschließend gegebenenfalls Wasser (G), sowie gegebenenfalls eine oder mehrere der Komponenten (E) und (F) zumischt und gegebenenfalls die erhaltene wässrige Pigmentdispersion mit Wasser (G) verdünnt. Vorzugsweise werden die Komponenten (B) und gegebenenfalls eine oder mehrere der Komponenten (C), (D), (E) und (F) zunächst vermischt und homogenisiert, dann die Komponente (A) in die vorgelegte Mischung eingerührt, wobei die Komponente (A) angeteigt und vordispergiert wird. Je nach Kornhärte der Komponente (A) wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Wälzenstühle oder Hochleistungsperfmühlen verwendet werden. Die Feindispergierung bzw. Mahlung der Komponente (A) erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser (G), vorzugsweise entionisiertem oder destilliertem Wasser, weiter verdünnt werden.

Die erfindungsgemäßen Pigmentpräparationen eignen sich zum Pigmentieren und Färben von natürlichen und synthetischen Materialien aller Art, insbesondere von wässrigen Anstrichmitteln, Dispersions- und Lackfarben, wasserverdünnbaren Lacken, Tapetenfarben und Druckfarben, zum Einfärben von Papier und Papierpulpe, zur Papiermassefärbung, zur Färbung von Papieroberflächen und Streichfarben, zur Papierherstellung und zum Einfärben von Kartonagen und Textilien.

Ferner eignen sich die erfindungsgemäßen Pigmentpräparationen zur Einfärbung makromolekularer Materialien aller Art, z. B. von natürlichen und synthetischen Fasermaterialien und bevorzugt Cellulosefasern. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, auch Pulverlacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten können Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d. h. dreidimensional gestaltet sein und sowohl vollständig oder nur teilweise bedruckt oder beschichtet werden.

Die erfindungsgemäßen Pigmentpräparationen sind außerdem geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonerbindemittel hierbei sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Außerdem sind die erfindungsgemäßen Pigmentpräparationen als Farbmittel in Tinten, vorzugsweise Ink-Jet Tinten, wie z. B. auf wässriger oder nichtwässriger Basis ("Solvent Based"), Mikroemulsionstinten, UV-härtbare Tinten sowie in solchen Tinten, die nach dem Hot-Melt-Verfahren funktionieren, geeignet. Außerdem können die erfindungsgemäßen Pigmentpräparationen auch als Farbmittel für Farbfilter ("Color Filter") für "Flat Panel Displays", sowohl für die Additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper") eingesetzt werden.

### Beispiele

### Herstellung der Dispergiermittel (B):

### Synthesebeispiel 1

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 136,4 g 2-Ethylhexylmethacrylat, 71,6 g Styrol und 16,5 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 16,5 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Das so erhaltene Polymer wurde unter Stickstoff in einem Kolben mit 32,7 g Amidosulfonsäure und 1,0 g Harnstoff vorgelegt. Dann wurde unter Rühren für 4 Stunden auf 100 °C erwärmt. Anschließend wurde mit 50 %iger Natronlauge der pH-Wert auf 6,5-7,5 eingestellt. Über NMR-Spektroskopie konnte ein Umsetzungsgrad von > 95 % zum entsprechenden Schwefelsäureester-Ammoniumsalz ermittelt werden.

Die nachfolgenden Synthesebeispiele 2 bis 4 werden analog Synthesebeispiel 1 unter Einsatz der folgenden Ausgangsstoffe durchgeführt:

### Synthesebeispiel 2

210 g Polyalkylenglykolmonomethacrylat (Molmasse 350, molares EO/PO-Verhältnis 1,7), 79,2 g 2-Ethylhexylmethacrylat, 41,6 g Styrol, 57,1 g Amidosulfonsäure, 1,8 g Harnstoff.

### Synthesebeispiel 3

258 g Polyalkylenglykolmonomethacrylat (Molmasse 750, molares EO/PO-Verhältnis 6,3), 87,5 g Laurylmethacrylat, 35,8 g Styrol, 32,7 g Amidosulfonsäure, 1,0 g Harnstoff.

### Synthesebeispiel 4

210 g Polyalkylenglykolmonomethacrylat (Molmasse 350, molares EO/PO-Verhältnis 1,7), 101,6 g Laurylmethacrylat, 41,6 g Styrol, 57,1 g Amidosulfonsäure, 1,0 g Harnstoff.

### Synthesebeispiel 5

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70 %ig in t-Butanol), 117,3 g Laurylmethacrylat, 48,0 g Styrol und 11,1 g 1-Dodecanthiol in 730 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,1 g des Initiators AMBN, gelöst in 150 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Das so erhaltene Copolymer wurde unter Stickstoff in einem Kolben vorgelegt. Dann wurde 22,7 g Maleinsäureanhydrid und 0,7 g Natriumhydroxid zugegeben und unter Rühren auf eine Temperatur von 75 bis 85 °C aufgeheizt. Bei dieser Temperatur wurde drei Stunden lang gerührt und anschließend 292 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

Die nachfolgenden Synthesebeispiele 6 bis 23 werden analog Synthesebeispiel 5 unter Einsatz der folgenden Ausgangsstoffe durchgeführt:

### Synthesebeispiel 6

452 g Polyalkylenglykolmonomethacrylat (Molmasse 2.000, molares EO/PO-Verhältnis 20,5, 70 %ig in t-Butanol), 80,4 g Laurylmethacrylat, 32,9 g Styrol, 15,5 g Maleinsäureanhydrid, 0,5 g Natriumhydroxid, 199 g wässrige Natriumsulfitlösung (10 %ig).

### Synthesebeispiel 7

210 g Polyalkylenglykolmonomethacrylat (Molmasse 350, molares EO/PO-Verhältnis1,7), 202,8 g Stearylmethacrylat, 62,4 g Styrol, 58,8 g Maleinsäureanhydrid, 1,9 g Natriumhydroxid, 756 g wässrige Natriumsulfitlösung (10 %ig).

### Synthesebeispiel 8

258 g Polyalkylenglykolmonomethacrylat (Molmasse 750, molares EO/PO-Verhältnis 6,3), 38,2 g Isobornylmethacrylat, 30,3 g Benzylmethacrylat, 33,7 g Maleinsäureanhydrid, 1,1 g Natriumhydroxid, 433 g wässrige Natriumsulfitlösung (10 %ig).

### Synthesebeispiel 9

363 g Polyalkylenglykolmonomethacrylat (Molmasse 1.100, molares EO/PO-Verhältnis 10,2, 70 % in t-Butanol), 39,3 g Tetrahydrofurfurylmethacrylat, 87,8 g Phenethylmethacrylat, 22,7 g Maleinsäureanhydrid, 0,7 g Natriumhydroxid, 292 g wässrige Natriumsulfitlösung (10 %ig).

### Synthesebeispiel 10

452 g Polyalkylenglykolmonomethacrylat (Molmasse 2.000, molares EO/PO-Verhältnis 20,5, 70 %ig in t-Butanol), 25,0 g 2-Ethoxyethylmethacrylat, 29,7 g 1-Vinylimidazol, 15,5 g Maleinsäureanhydrid, 0,5 g Natriumhydroxid, 199 g wässrige Natriumsulfitlösung (10 %ig).

### Synthesebeispiel 11

210 g Polyalkylenglykolmonomethacrylat (Molmasse 350, molares EO/PO-Verhältnis1,7), 69,0 g Laurylacrylat, 52,8 g Benzylmethacrylat, 58,8 g Maleinsäureanhydrid, 1,9 g Natriumhydroxid, 755 g wässrige Natriumsulfitlösung (10 %ig).

### Synthesebeispiel 12

258 g Polyalkylenglykolmonomethacrylat (Molmasse 750, molares EO/PO-Verhältnis 6,3), 38,2 g 1-Vinyl-2-Pyrrolidon, 107,3 g Styrol, 33,7 g Maleinsäureanhydrid, 1,1 g Natriumhydroxid, 433 g wässrige Natriumsulfitlösung (10 %ig).

### Synthesebeispiel 13

452 g Polyalkylenglykolmonomethacrylat (Molmasse 2000, molares EO/PO-Verhältnis 20,5, 70 %ig in t-Butanol), 31,3 g 2-Ethylhexylmethacrylat, 27,8 g Benzylmethacrylat, 15,5 g Maleinsäureanhydrid, 0,5 g Natriumhydroxid, 199 g wässrige Natriumsulfitlösung (10 %ig).

### Synthesebeispiel 14

363 g Polyalkylenglykolmonomethacrylat (Molmasse 1.100, molares EO/PO-Verhältnis 10,2, 70 % in t-Butanol), 58,7 g Laurylmethacrylat, 43,9 g Phenethylmethacrylat, 22,7 g Maleinsäureanhydrid, 0,7 g Natriumhydroxid, 292 g wässrige Natriumsulfitlösung (10 %ig).

### Synthesebeispiel 15

258 g Polyalkylenglykolmonomethacrylat (Molmasse 750, molares EO/PO-Verhältnis 6,3), 116,3 g Stearylmethacrylat, 70,9 g 2-Phenoxyethylmethacrylat, 33,7 g Maleinsäureanhydrid, 1,1 g Natriumhydroxid, 433 g wässrige Natriumsulfitlösung (10 %ig).

### Synthesebeispiel 16

210 g Polyalkylenglykolmonomethacrylat (Molmasse 350, molares EO/PO-Verhältnis 0,43), 72,0 g Laurylacrylat, 52,8 g Benzylmethacrylat, 58,8 g Maleinsäureanhydrid, 1,9 g Natriumhydroxid, 755 g wässrige Natriumsulfitlösung (10 %ig).

### Synthesebeispiel 17

258 g Polyalkylenglykolmonomethacrylat (Molmasse 750, molares EO/PO-Verhältnis 0,22), 87,5 g Laurylmethacrylat, 35,8 g Styrol, 33,7 g Maleinsäureanhydrid, 1,1 g Natriumhydroxid, 433 g wässrige Natriumsulfitlösung (10 %ig).

### Synthesebeispiel 18

363 g Polyalkylenglykolmonomethacrylat (Molmasse 1.100, molares EO/PO-Verhältnis 0,30, 70 % in t-Butanol), 58,7 g Laurylmethacrylat, 43,9 g Phenethylmethacrylat, 22,7 g Maleinsäureanhydrid, 0,7 g Natriumhydroxid, 292 g wässrige Natriumsulfitlösung (10 %ig).

### Synthesebeispiel 19

388 g Polyalkylenglykolmonomethacrylat (Molmasse 750, molares EO/PO-Verhältnis 6,3), 68,2 g 2-Ethylhexylmethacrylat, 35,8 g Styrol, 50,7 g Maleinsäureanhydrid, 1,7 g Natriumhydroxid, 652 g wässrige Natriumsulfitlösung (10 %ig).

### Synthesebeispiel 20

517 g Polyalkylenglykolmonomethacrylat (Molmasse 750, molares EO/PO-Verhältnis 6,3), 68,2 g 2-Ethylhexylmethacrylat, 35,8 g Styrol, 67,6 g Maleinsäureanhydrid, 2,2 g Natriumhydroxid, 869 g wässrige Natriumsulfitlösung (10 %ig).

### Synthesebeispiel 21

280 g Polyalkylenglykolmonomethacrylat (Molmasse 350, molares EO/PO-Verhältnis 1,7), 79,2 g 2-Ethylhexylmethacrylat, 41,6 g Styrol, 78,5 g Maleinsäureanhydrid, 2,6 g Natriumhydroxid, 1.009 g wässrige Natriumsulfitlösung (10 %ig).

### Synthesebeispiel 22

387 g Polyalkylenglykolmonomethacrylat (Molmasse 750, molares EO/PO-Verhältnis 6,3), 87,5 g Laurylmethacrylat, 35,8 g Styrol, 50,6 g Maleinsäureanhydrid, 1,7 g Natriumhydroxid, 650 g wässrige Natriumsulfitlösung (10 %ig).

### Synthesebeispiel 23

267 g Polyalkylenglykolmonomethacrylat (Molmasse 350, molares EO/PO-Verhältnis 1,7), 101,6 g Laurylmethacrylat, 41,6 g Styrol, 74,8 g Maleinsäureanhydrid, 2,4 g Natriumhydroxid, 961 g wässrige Natriumsulfitlösung (10 %ig).

### Herstellung einer Pigmentpräparation:

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beurteilung einer Pigmentpräparation

Die Bestimmung der Farbstärke und des Farbtons erfolgte nach DIN 55986. Für den "Rub-Out-Test" wurde die Dispersionsfarbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit dem einzufärbenden Medium wurde mit einer Dispersionsfarbe für Außenanstriche ermittelt (Wasserbasis, 20 % TiO₂).

Ferner wurde die Coloristik einer Papiermasseeinfärbung beurteilt. Hierzu wurde eine Zellstoffsuspension 10 %ig mit der Pigmentpräparation eingefärbt, daraus durch Trocknung und Verpressen ein festes Papier hergestellt und im folgenden Farbstärke und Farbton ermittelt.

Die Bestimmung des Schaumvermögens erfolgte nach einer internen Methode, um hohe Fließgeschwindigkeiten der Dispersionen zu simulieren. Dazu wurden die mit Wasser auf 2 % verdünnten Dispersionen mittels einer Schlauchpumpe mit hoher Fließgeschwindigkeit kontinuierlich in einen Glaszylinder gespritzt und die Höhe des entstehenden Schaums beurteilt.

Die Scherstabilität der Pigmentpräparationen wurde durch eine interne Messmethode ermittelt. Dazu wurden mit Hilfe kationischer Epichlorhydrinharze die Pigmentteilchen der Dispersion in einer Zellstoffsuspension geflockt. Die Scherung wurde mit Hilfe eines handelsüblichen Küchenmixers (hier Braun MX 32) unter Einstellung einer hohen Rotationsgeschwindigkeit durchgeführt. Nachfolgend wurde aus der Pulpe Papier hergestellt und die Farbstärke einer gescherten zu einer ungescherten Dispersion verglichen. Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.

Für eine Beurteilung der Lagerstabilität der Dispersionen wurde die Viskosität direkt nach der Herstellung der Präparation gemessen, sowie nach vierwöchiger Lagerung bei 50 °C.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beispiel 1

| | |
|---|---|
| 50 Teile | Komponente (A), C.I. Pigment Blue 15 |
| 6 Teile | Komponente (B), Dispergiermittel entsprechend Synthesebeispiel 21 |
| 2 Teile | Komponente (C), Benetzer |
| 10 Teile | Komponente (E), Ethylenglykol |
| 0,2 Teile | Komponente (F), Konservierungsmittel |
| Rest | Komponente (G), Wasser |

Die Pigmentpräparation hat in den Weißdispersionen eine hohe Farbstärke und ist stabil. Der Rub-Out-Test zeigt keine Farbstärkeunterschiede im Vergleich zur nachgeriebenen Fläche. Bei der Papiereinfärbung ergibt die Präparation eine hohe Farbstärke mit reinem Farbton. Der Verlust an Farbstärke im Schertest beträgt 4 %. Im Schaumtest zeigt die Präparation keine Tendenz zum Schäumen. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 488 mPa·s.

### Beispiel 2

| | |
|---|---|
| 45 Teile | Komponente (A), C.I. Pigment Red 112 |
| 8 Teile | Komponente (B), Dispergiermittel entsprechend Synthesebeispiel 23 |
| 1 Teil | Komponente (C), Benetzer |
| 10 Teile | Komponente (E), Glycerin |
| 0,2 Teile | Komponente (F), Konservierungsmittel |
| Rest | Komponente (G), Wasser |

Die Pigmentpräparation hat in den Weißdispersionen eine hohe Farbstärke und ist stabil. Der Rub-Out-Test zeigt keine Farbstärkeunterschiede im Vergleich zur nachgeriebenen Fläche. Bei der Papiereinfärbung ergibt die Präparation eine hohe Farbstärke mit reinem Farbton. Der Verlust an Farbstärke im Schertest beträgt 2 %. Im Schaumtest zeigt die Präparation nur eine sehr geringe Tendenz zum Schäumen, wobei die Schaumblasen schnell wieder zerfallen. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 604 mPa·s.

### Beispiel 3

| | |
|---|---|
| 40 Teile | Komponente (A), C.I. Pigment Violet 23 |
| 12 Teile | Komponente (B), Dispergiermittel entsprechend Synthesebeispiel 17 |
| 3 Teile | Komponente (C), Benetzer |
| 10 Teile | Komponente (E), Ethylenglykol |
| 0,2 Teile | Komponente (F), Konservierungsmittel |
| Rest | Komponente (G), Wasser |

Die Pigmentpräparation hat in den Weißdispersionen eine hohe Farbstärke und ist stabil. Der Rub-Out-Test zeigt nur sehr geringe Farbstärkeunterschiede im Vergleich zur nachgeriebenen Fläche. Bei der Papiereinfärbung ergibt die Präparation eine hohe Farbstärke mit reinem Farbton. Der Verlust an Farbstärke im Schertest beträgt 5 %. Im Schaumtest zeigt die Präparation keine Tendenz zum Schäumen. Die Präparation erweist sich als gut fließfähig und lagerstabil. Die Viskosität nach der Herstellung beträgt 196 mPa·s.

### Beispiel 4

| | |
|---|---|
| 44 Teile | Komponente (A), C.I. Pigment Red 170 |
| 8 Teile | Komponente (B), Dispergiermittel entsprechend Synthesebeispiel 1 |
| 1 Teil | Komponente (C), Benetzer |
| 5 Teile | Komponente (E), Propylenglycol |
| 0,2 Teile | Komponente (F), Konservierungsmittel |
| Rest | Komponente (G), Wasser |

Die Pigmentpräparation hat in den Weißdispersionen eine hohe Farbstärke und ist stabil. Der Rub-Out-Test zeigt keine Farbstärkeunterschiede im Vergleich zur nachgeriebenen Fläche. Bei der Papiereinfärbung ergibt die Präparation eine hohe Farbstärke mit reinem Farbton. Es gibt keinen Verlust an Farbstärke im Schertest. Im Schaumtest zeigt die Präparation keine Tendenz zum Schäumen. Die Präparation erweist sich als gut fließfähig und lagerstabil. Die Viskosität nach der Herstellung beträgt 383 mPa·s.

### Beispiel 5

| | |
|---|---|
| 45 Teile | Komponente (A), C.I. Pigment Orange 13 |
| 9 Teile | Komponente (B), Dispergiermittel entsprechend Synthesebeispiel 9 |
| 1,5 Teile | Komponente (C), Benetzer |
| 10 Teile | Komponente (E), Ethylenglycol |
| 0,2 Teile | Komponente (F), Konservierungsmittel |
| Rest | Komponente (G), Wasser |

Die Pigmentpräparation hat in den Weißdispersionen eine hohe Farbstärke und ist stabil. Der Rub-Out-Test zeigt keine Farbstärkeunterschiede im Vergleich zur nachgeriebenen Fläche. Bei der Papiereinfärbung ergibt die Präparation eine hohe Farbstärke mit reinem Farbton. Der Verlust an Farbstärke im Schertest beträgt 5 %. Im Schaumtest zeigt die Präparation keine Tendenz zum Schäumen. Die Präparation erweist sich als gut fließfähig und lagerstabil. Die Viskosität nach der Herstellung beträgt 754 mPa·s.

Weitere Beispiele zu Pigmentpräparationen sind in der folgenden Tabelle enthalten. Es wird jeweils eine 40 %ige Pigmentpräparationen hergestellt auf Basis Pigment Yellow 83 nach folgendem Rezept:

| | |
|---|---|
| 40,0 Teile | Komponente (A), C.I. Pigment Yellow 83 |
| 10,0 Teile | Komponente (B), Dispergiermittel entsprechend der Formel (I) oder (II), aus dem Synthesebeispiel wie in der Tabelle angegeben |
| 2,0 Teile | Komponente (C), Benetzer |
| 10,0 Teile | Komponente (E), Propylenglykol |
| 0,2 Teile | Komponente (F), Konservierungsmittel |
| Rest | Komponente (G), Wasser |

| Synthese- beispiel | Farbstärke in Weiß-dispersion | Rub-Out-Test | Farbstärke im Papier | Farbstärkeverlust im Schertest | Schaumbildung im Schaumtest | Fließfähigkeit der Dispersion | Viskosität nach Herstellung | Lager-stabilität |
|---|---|---|---|---|---|---|---|---|
| Nr. | % | | % | % | | | mPa·s | |
| 1 | 101 | kein Rub-out | 105 | 3 | keine Schaumbildung | sehr gut | 295 | sehr gut |
| 2 | 98 | geringer Rub-out | 100 | 1 | keine Schaumbildung | gut | 943 | gut |
| 3 | 98 | kein Rub-out | 102 | 0 | sehr geringe Schaumbildung | sehr gut | 321 | sehr gut |
| 4 | 105 | kein Rub-out | 101 | 4 | keine Schaumbildung | gut | 620 | gut |
| 5 | 101 | kein Rub-out | 99 | 3 | keine Schaumbildung | sehr gut | 199 | sehr gut |
| 6 | 95 | geringer Rub-out | 102 | 0 | keine Schaumbildung | sehr gut | 428 | sehr gut |
| 7 | 100 | kein Rub-out | 104 | 1 | keine Schaumbildung | sehr gut | 224 | sehr gut |
| 8 | 108 | kein Rub-out | 106 | 4 | keine Schaumbildung | sehr gut | 355 | ausreichend |
| 9 | 104 | kein Rub-out | 98 | 5 | geringe Schaumbildung | gut | 768 | gut |
| 10 | 98 | kein Rub-out | 102 | 2 | keine Schaumbildung | sehr gut | 464 | sehr gut |
| 11 | 110 | leichter Rub-out | 108 | 4 | keine Schaumbildung | sehr gut | 472 | sehr gut |
| 12 | 101 | kein Rub-out | 95 | 0 | keine Schaumbildung | gut | 861 | gut |
| 13 | 104 | kein Rub-out | 99 | 2 | keine Schaumbildung | sehr gut | 169 | sehr gut |
| 14 | 100 | kein Rub-out | 102 | 1 | keine Schaumbildung | sehr gut | 678 | gut |
| 15 | 106 | kein Rub-out | 103 | 5 | keine Schaumbildung | sehr gut | 595 | sehr gut |
| 16 | 101 | kein Rub-out | 105 | 3 | geringe Schaumbildung | sehr gut | 437 | gut |
| 17 | 97 | geringer Rub-out | 100 | 1 | keine Schaumbildung | sehr gut | 512 | gut |
| 18 | 103 | kein Rub-out | 101 | 0 | keine Schaumbildung | sehr gut | 284 | sehr gut |
| 19 | 99 | kein Rub-out | 103 | 1 | keine Schaumbildung | sehr gut | 152 | sehr gut |
| 20 | 107 | kein Rub-out | 105 | 3 | keine Schaumbildung | sehr gut | 615 | gut |
| 21 | 99 | kein Rub-out | 110 | 5 | keine Schaumbildung | sehr gut | 541 | gut |
| 22 | 101 | kein Rub-out | 102 | 3 | keine Schaumbildung | sehr gut | 477 | sehr gut |
| 23 | 102 | kein Rub-out | 101 | 2 | keine Schaumbildung | sehr gut | 210 | sehr gut |

## Patentansprüche

1. Wässrige Pigmentpräparation, enthaltend
(A) mindestens ein organisches und/oder anorganisches Pigment,
(B) ein Dispergiermittel der Formel (I) oder (II), oder Mischungen der Dispergiermittel der Formeln (I) und (II), 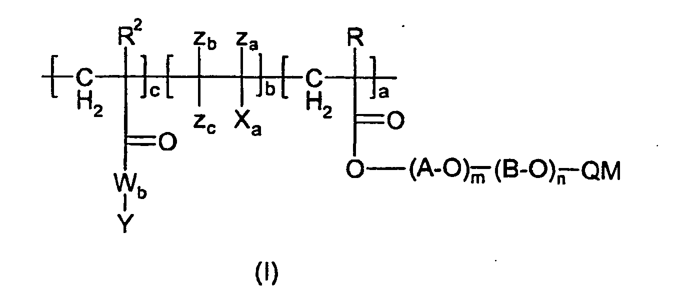 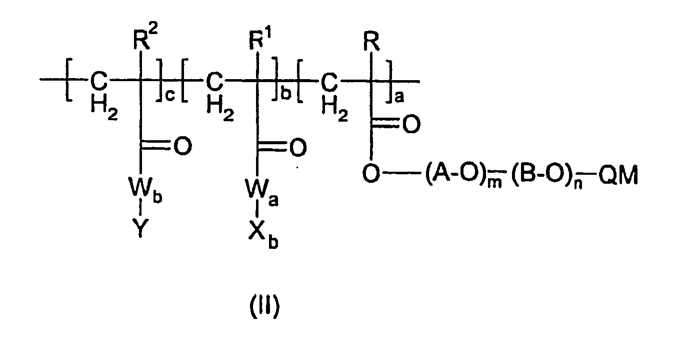 wobei
die Indices a, b und c den molaren Anteil des jeweiligen Monomeren angeben a = 0,01 - 0,8
b = 0,001 - 0,8
c = 0,001 - 0,8
wobei die Summe aus a + b + c gleich 1 ist, und
A für C₂-C₄-Alkylen und
B für ein von A unterschiedliches C₂-C₄-Alkylen steht, und wobei die Alkylenoxideinheiten (A-O)ₘ und (B-O)ₙ blockhartig angeordnet ist,
wobei in Komponente (B) (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen,
R für Wasserstoff oder Methyl steht,
m eine Zahl von 1 bis 500 ist;
n eine Zahl von 1 bis 500 ist;
wobei die Summe m + n gleich 2 bis 1.000 ist;
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht,
Z_{c} für H oder (C₁-C₄)-Alkyl steht;
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome N, O und S enthält,
Wₐ für Sauerstoff oder die Gruppe NH steht,
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und auch ungesättigt sein kann,
W_{b} für Sauerstoff oder die Gruppe NH steht;
Q für SO₃, CH₂COO steht;
oder QM bedeutet: 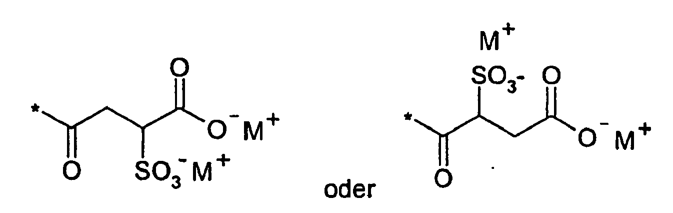 wobei
M für H, ein einwertiges Metallkation, ein zweiwertiges Metallkation, NH₄⁺, ein sekundäres, tertiäres oder quartäres Ammoniumion, oder eine Kombination davon, oder für Äquivalente von zwei-, drei- oder mehrwertigen Metallionen steht;
(C) gegebenenfalls Benetzer,
(D) gegebenenfalls weitere Tenside und/oder Dispergiermittel,
(E) gegebenenfalls ein oder mehrere organische Lösemittel und/oder eine oder mehrere hydrotrope Substanzen,
(F) gegebenenfalls weitere zur Herstellung wässriger Pigmentdispersionen übliche Zusatzstoffe, und
(G) Wasser.

2. Pigmentpräparation nach Anspruch 1, enthaltend 5 bis 80 Gew.-% der Komponente (A).

3. Pigmentpräparation nach Anspruch 1 oder 2, enthaltend 0,1 bis 30 Gew.-% der Komponente (B).

4. Pigmentpräparation nach mindestens einem der Ansprüche 1 bis 3, **gekennzeichnet durch** folgende Zusammensetzung der Komponenten (A) bis (G):
(A) 5 bis 80 Gew.-%,
(B) 0,1 bis 30 Gew.-%,
(C) 0 bis 10 Gew.-%,
(D) 0 bis 20 Gew.-%,
(E) 0 bis 30 Gew.-%,
(F) 0 bis 20 Gew.-%,
(G) Rest Wasser,
jeweils bezogen auf das Gesamtgewicht der Pigmentpräparation.

5. Pigmentpräparation nach mindestens einem der Ansprüche 1 bis 4, **gekennzeichnet durch** folgende Zusammensetzung der Komponenten (A) bis (G):
(A) 10 bis 70 Gew.-%
(B) 2 bis 15 Gew.-%,
(C) 0,1 bis 5 Gew.-%,
(D) 1 bis 10 Gew.-%,
(E) 5 bis 20 Gew.-%,
(F) 0,1 bis 5 Gew.-%,
(G) Rest Wasser,
jeweils bezogen auf das Gesamtgewicht der Pigmentpräparation.

6. Pigmentpräparation nach mindestens einem der Ansprüche 1 bis 5, **dadurch gekennzeichnet, dass** das organische Pigment von Komponente (A) ein Monoazo-, Disazo-, verlacktes Azo-, β-Naphthol-, Naphthol AS-, Benzimidazolon-, Disazokondensations-, Azo-Metallkomplex-Pigment oder ein polycyclisches Pigment aus der Gruppe der Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße ist.

7. Pigmentpräparation nach mindestens einem der Ansprüche 1 bis 6, **dadurch gekennzeichnet, dass** in Komponente (B) (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen, wobei der molare Anteil der Ethylenoxid-Einheiten 50 bis 98 %, bezogen auf die Summe der Ethylenoxid- und Propylenoxid-Einheiten, beträgt.

8. Pigmentpräparation nach mindestens einem der Ansprüche 1 bis 7, **dadurch gekennzeichnet, dass** in Komponente (B) die ionischen Endgruppen QM gemäß Formel (I) oder (II) Sulfosuccinate sind.

9. Verfahren zur Herstellung einer Pigmentpräparation nach mindestens einem der Ansprüche 1 bis 8, **dadurch gekennzeichnet, dass** man die Komponente (A) in Form von Pulver, Granulat oder wässrigem Presskuchen in Gegenwart von Wasser (G) sowie den Komponenten (B) und gegebenenfalls (C) und (D) dispergiert, anschließend gegebenenfalls Wasser (G), sowie gegebenenfalls eine oder mehrere der Komponenten (E) und (F) zumischt und gegebenenfalls die erhaltende wässrige Pigmentdispersion mit Wasser (G) verdünnt;
oder die Komponenten (B) vorgibt und gegebenenfalls eine oder mehrere der Komponenten (C), (D), (E) und (F) zunächst vermischt und homogenisiert, dann die Komponente (A) in die vorgelegte Mischung eingerührt, wobei die Komponente (A) angeteigt und vordispergiert wird.

10. Verwendung einer Pigmentpräparation nach einem oder mehreren der Ansprüche 1 bis 8 zum Pigmentieren natürlicher oder synthetischer Materialien.

11. Verwendung nach Anspruch 10 zum Pigmentieren von wässrigen Anstrichmitteln, Dispersions- und Lackfarben, wasserverdünnbaren Lacken, Tapetenfarben und Druckfarben, zum Einfärben von Papier und Papierpulpe, zur Papiermassefärbung, zur Färbung von Papieroberflächen und Streichfarben, zur Papierherstellung und zum Einfärben von Kartonagen und Textilien.

12. Verwendung nach Anspruch 10 zum Pigmentieren von natürlichen und synthetischen Fasermaterialien, Cellulosefasern, Laminateinfärbung sowie zur Herstellung von Drucktinten, Ink-Jet-Tinten, elektrophotographischen Tonern, Pulverlacken, Farbfiltern, elektronischen Tinten und "Electronic Paper", Color Filter, Holzschutzsystemen, Viskose-Spinnfärbung, Wurstdärmen, Saatgut, Düngemitteln, Glasflaschen, sowie zur Massefärbung von Dachziegeln, zur Einfärbung für Putze, Beton, Holzbeizen, Buntstiftminen, Faserschreibern, Wachsen, Paraffinen, Tuschen, Pasten für Kugelschreiber, Kreiden, Wasch- und Reinigungsmitteln, Schuhpflegemitteln, Latex-Produkten, Schleifmitteln sowie zum Einfärben von Kunststoffen.

## Claims

1. An aqueous pigment preparation comprising
(A) at least one organic and/or inorganic pigment,
(B) a dispersant of formula (I) or (II) or mixtures of dispersants of formulae (I) and (II), 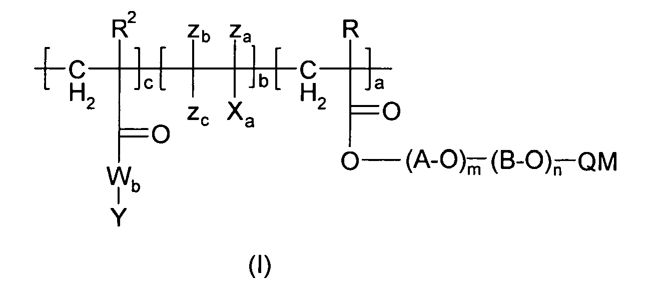 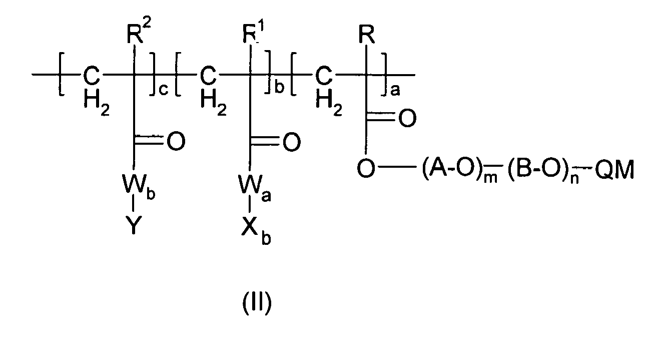 where
the indices a, b and c indicate the molar fraction of the respective monomers
a = 0.01 - 0.8
b = 0.001 - 0.8
c = 0.001 - 0.8
provided the sum total of a + b + c is 1, and
A represents C₂-C₄-alkylene,
B represents a C₂-C₄-alkylene other than A, and
wherein the alkylene oxide units (A-O)ₘ and (B-O)ₙ are arranged blocklike,
wherein in said component (B), (A-O)ₘ represents propylene oxide units and (B-O)ₙ represents ethylene oxide units, or (A-O)ₘ represents ethylene oxide units and (B-O)ₙ represents propylene oxide units,
R represents hydrogen or methyl,
m is from 1 to 500;
n is from 1 to 500;
provided the sum total of m + n is from 2 to 1000;
Xₐ represents an aromatic or araliphatic radical having 3 to 30 carbon atoms which optionally contains one or more of the hetero atoms N, O and S,
Zₐ represents H or (C₁-C₄)-alkyl,
Z_{b} represents H or (C₁-C₄)-alkyl,
Z_{c} represents H or (C₁-C₄)-alkyl;
R¹ represents hydrogen or methyl,
X_{b} represents an aromatic or araliphatic radical having 3 to 30 carbon atoms which optionally contains one or more of the hetero atoms N, O und S,
Wₐ represents oxygen or an NH group,
R² represents hydrogen or methyl,
Y represents an aliphatic hydrocarbyl radical having 1 to 30 carbon atoms, which may be linear or branched or else cyclic, and may also be unsaturated,
W_{b} represents oxygen or an NH group;
Q Q represents SO₃, CH₂COO;
or QM represents: 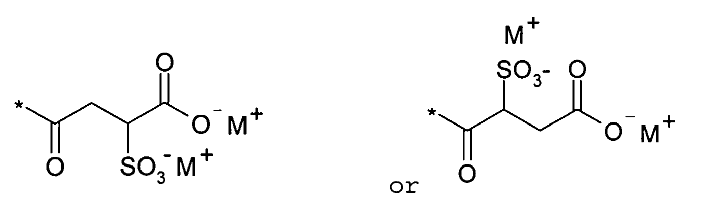 where
M represents H, a monovalent metal cation, a divalent metal cation, NH₄⁺, a secondary, tertiary or quaternary ammonium ion, or a combination thereof, or represents equivalents of di-, tri- or polyvalent metal ions;
(C) optionally wetters,
(D) optionally further surfactants and/or dispersants,
(E) optionally one or more organic solvents and/or one or more hydrotropic substances,
(F) optionally further additive materials customary for preparing aqueous pigment dispersions, and
(G) water.

2. The pigment preparation as claimed in claim 1, comprising 5% to 80% by weight of said component (A).

3. The pigment preparation as claimed in claim 1 or 2, comprising 0.1% to 30% by weight of said component (B).

4. The pigment preparation as claimed in at least one of claims 1 to 3, **characterized by** the following composition of said components (A) to (G):
(A) 5% to 80% by weight,
(B) 0.1% to 30% by weight,
(C) 0% to 10% by weight,
(D) 0% to 20% by weight,
(E) 0% to 30% by weight,
(F) 0% to 20% by weight,
(G) balance water,
all based on the total weight of said pigment preparation.

5. The pigment preparation as claimed in at least one of claims 1 to 4, **characterized by** the following composition of said components (A) to (G):
(A) 10% to 70% by weight,
(B) 2% to 15% by weight,
(C) 0.1% to 5% by weight,
(D) 1% to 10% by weight,
(E) 5% to 20% by weight,
(F) 0.1% to 5% by weight,
(G) balance water,
all based on the total weight of said pigment preparation.

6. The pigment preparation as claimed in at least one of claims 1 to 5, wherein the organic pigment of said component (A) is a monoazo, disazo, laked azo, β-naphthol, Naphthol AS, benzimidazolone, disazo condensation, azo metal complex pigment or a polycyclic pigment from the group of the phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or carbon blacks.

7. The pigment preparation as claimed in at least one of claims 1 to 6, wherein, in said component (B), (A-O)ₘ represents propylene oxide units and (B-O)ₙ represents ethylene oxide units, or (A-O)ₘ represents ethylene oxide units and (B-O)ₙ represents propylene oxide units, and the molar fraction of ethylene oxide units is in the range from 50 to 98%, based on the sum total of ethylene oxide and propylene oxide units.

8. The pigment preparation as claimed in at least one of claims 1 to 7, wherein, in said component (B), the ionic end groups QM as per formula (I) or (II) are sulfosuccinates.

9. A process for producing a pigment preparation as claimed in at least one of claims 1 to 8, which comprises dispersing said component (A) in the form of powder, granulate or aqueous presscake in the presence of water (G) and also said components (B) and optionally (C) and (D), then optionally admixing water (G) and also optionally one or more of said components (E) and (F) and optionally diluting the resulting aqueous pigment dispersion with water (G);
or said components (B) being precharged and optionally one or more of said components (C), (D), (E) and (F) being initially mixed and homogenized, then said component (A) being stirred into the initially charged mixture, said component (A) being incipiently pasted and predispersed.

10. The use of a pigment preparation as claimed in one or more of claims 1 to 8 for pigmenting natural or synthetic materials.

11. The use as claimed in claim 10 for pigmenting aqueous paints, dispersion and varnish colors, water-thinnable varnishes, wallpaper colors and printing colors, for coloration of paper and paper pulp, for paper pulp coloration, for coloration of paper surfaces and paper coating compositions, for papermaking and for coloration of cardboard and textiles.

12. The use as claimed in claim 10 for pigmenting natural and synthetic fiber materials, cellulose fibers, and for laminate coloration and also for production of printing inks, ink-jet inks, electrophotographic toners, powder coatings, color filters, electronic inks and "electronic paper", color filters, wood preservation systems, viscose dope dyeing, sausage casings, seed, fertilizers, glass bottles, and also for mass coloration of roof shingles, in coloration for renders, concrete, wood stains, colored pencil leads, felt tip pens, waxes, paraffins, graphics inks, ballpoint pen pastes, chalks, washing and cleaning compositions, shoe care agents, latex products, abrasives, and also for coloration of plastics.

## Revendications

1. Préparation aqueuse pigmentaire, contenant
(A) au moins un pigment organique et/ou inorganique,
(B) un dispersant de formule (I) ou (II) ou des
mélanges des dispersants des formules (I) et (II) 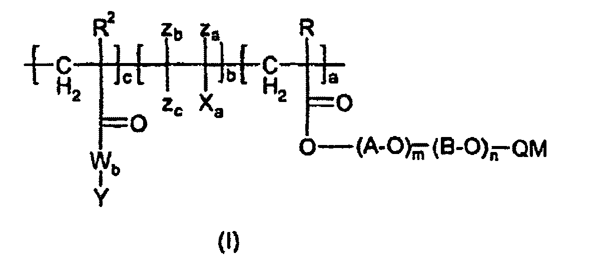 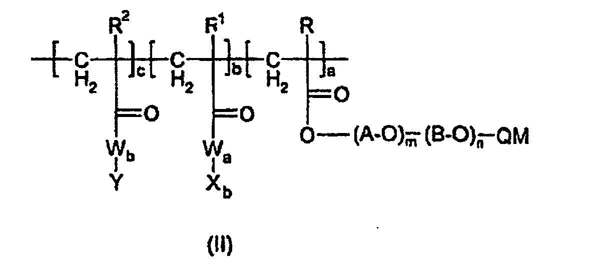 où les indices a, b et c indiquent la proportion molaire de chaque monomètre :
a = 0,01-0,8
b = 0,001-0,8
c = 0,001-0,8
où la somme de a + b + c est égale à 1 ; et
A représente C₂-C₄-alkylène et
B représente un C₂-C₄-alkylène différent de A et où les unités d'oxyde d'alkylène (A-O)ₘ et (B-O)ₙ sont disposées en blocs, où, dans le composant (B) (A-O)ₘ représente des unités d'oxyde de propylène et (B-O)ₙ représente des unités d'oxyde d'éthylène ou (A-O)ₘ représente des unités d'oxyde d'éthylène et (B-O)ₙ représente des unités d'oxyde de propylène
R représente hydrogène ou méthyle,
m représente un nombre de 1 à 500 ;
n représente un nombre de 1 à 500 ;
où la somme de m + n est égale à 2 à 1000 ;
Xₐ représente un radical aromatique ou araliphatique comprenant 3 à 30 atomes de carbone, qui contient le cas échéant un ou plusieurs des hétéroatomes N, O et S,
Zₐ représente H ou (C₁-C₄)-alkyle,
Z_{b} représente H ou (C₁-C₄)-alkyle,
Z_{c} représente H ou (C₁-C₄)-alkyle,
R¹ représente hydrogène ou méthyle,
X_{b} représente un radical aromatique ou araliphatique comprenant 3 à 30 atomes de carbone, qui contient le cas échéant un ou plusieurs des hétéroatomes N, O et S,
Wₐ représente oxygène ou le groupe NH,
R² représente hydrogène ou méthyle,
Y représente un radical hydrocarboné aliphatique comprenant 1 à 30 atomes de carbone, qui peut être linéaire ou ramifié, ou également cyclique, et qui peut également être insaturé,
W_{b} représente oxygène ou le groupe NH,
Q représente SO₃, CH₂COO ;
ou QM signifie : 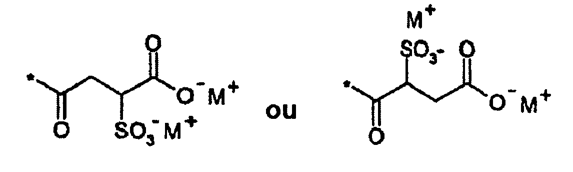 où
M représente H, un cation métallique monovalent, un cation métallique divalent, NH₄⁺, un ion d'ammonium secondaire, tertiaire ou quaternaire ou une combinaison de ceux-ci.
ou des équivalents d'ions métalliques divalents, trivalents ou polyvalents ;
(C) le cas échéant un mouillant,
(D) le cas échéant d'autres agents tensioactifs et/ou dispersants,
(E) le cas échéant un ou plusieurs solvants organiques et/ou une ou plusieurs substances hydrotropes,
(F) le cas échéant d'autres additifs usuels pour la préparation de dispersions aqueuses pigmentaires, et
(G) de l'eau.

2. Préparation pigmentaire selon la revendication 1, contenant 5 à 80% en poids du composant (A).

3. Préparation pigmentaire selon la revendication 1 ou 2, contenant 0,1 à 30% en poids du composant (B).

4. Préparation pigmentaire selon au moins l'une quelconque des revendications 1 à 3, **caractérisée par** la composition suivante des composants (A) à (G) :
(A) 5 à 80% en poids,
(B) 0,1 à 30% en poids,
(C) 0 à 10% en poids,
(D) 0 à 20% en poids,
(E) 0 à 30% en poids,
(F) 0 à 20% en poids,
(G) pour le reste de l'eau
à chaque fois par rapport au poids total de la préparation pigmentaire.

5. Préparation pigmentaire selon au moins l'une quelconque des revendications 1 à 4, **caractérisée par** la composition suivante des composants (A) à (G) :
(A) 10 à 70% en poids
(B) 2 à 15% en poids,
(C) 0,1 à 5% en poids,
(D) 1 à 10% en poids,
(E) 5 à 20% en poids,
(F) 0,1 à 5% en poids,
(G) pour le reste de l'eau
à chaque fois par rapport au poids total de la préparation pigmentaire.

6. Préparation pigmentaire selon au moins l'une quelconque des revendications 1 à 5, **caractérisée en ce que** le pigment organique du composant (A) est un pigment de type monoazo, diazo, azo laqué, β-naphtol, naphtol AS, benzimidazolone, diazo condensé, azo-complexe métallique ou un pigment polycyclique du groupe formé par les pigments de type phtalocyanine, quinacridone, pérylène, périnone, thio-indigo, anthanthrone, anthraquinone, flavanthrone, indanthrone, isoviolanthrone, pyranthrone, dioxazine, quinophtalone, iso-indolinone, iso-indoline et dicétopyrrolopyrrole ou des suies.

7. Préparation pigmentaire selon au moins l'une quelconque des revendications 1 à 6, **caractérisée en ce que**, dans le composant (B) (A-O)ₘ représente des unités d'oxyde de propylène et (B-O)ₙ représente des unités d'oxyde d'éthylène ou (A-O)ₘ représente des unités d'oxyde d'éthylène et (B-O)ₙ représente des unités d'oxyde de propylène, la proportion molaire des unités d'oxyde d'éthylène étant de 50 à 98%, par rapport à la somme des unités d'oxyde d'éthylène et d'oxyde de propylène.

8. Préparation pigmentaire selon au moins l'une quelconque des revendications 1 à 7, **caractérisée en ce que** dans le composant (B) les groupes terminaux ioniques QM selon la formule (I) ou (II) sont des sulfosuccinates.

9. Procédé pour la confection d'une préparation pigmentaire selon au moins l'une quelconque des revendications 1 à 8, **caractérisé en ce qu'**on disperse le composant (A) sous forme de poudre, de granulat ou de gâteau de presse aqueux en présence d'eau (G) ainsi que des composants (B) et le cas échéant (C) et (D), ensuite, on y mélange le cas échéant de l'eau (G), ainsi que le cas échéant un ou plusieurs des composants (E) et (F) et on dilue le cas échéant la dispersion pigmentaire aqueuse obtenue avec de l'eau (G) ;
ou on dispose au préalable les composants (B) et on y mélange et homogénéise d'abord le cas échéant un ou plusieurs des composants (C), (D), (E) et (F), puis on délaye le composant (A) dans le mélange disposé au préalable, le composant (A) étant gâché et prédispersé.

10. Utilisation d'une préparation pigmentaire selon l'une ou plusieurs des revendications 1 à 8 pour la pigmentation de matériaux naturels ou synthétiques.

11. Utilisation selon la revendication 10 pour la pigmentation de peintures aqueuses, d'encres dispersées et laquées, de laques diluables à l'eau, d'encres pour tapis et d'encres d'imprimerie, pour la coloration de papier et de pulpe de papier, pour la coloration de la pâte à papier, pour la coloration de surfaces de papier et de peintures, pour la fabrication de papier et pour la coloration de produits en carton et de textiles.

12. Utilisation selon la revendication 10 pour la pigmentation de matériaux fibreux naturels et synthétiques, de fibres de cellulose, la coloration de laminés ainsi que pour la préparation d'encres d'imprimerie, d'encres pour imprimantes à jet d'encre, de toners électrophotographiques, de laques en poudre, de filtres couleur, d'encres électroniques et de papier électronique ("Electronic Paper"), de systèmes de protection du bois, pour le filage-coloration de viscose, pour la préparation de boyaux pour saucisses, de semences, d'engrais, de bouteilles en verre ainsi que pour la coloration en masse de tuiles, pour la coloration d'enduits, de béton, de teintures pour bois, de mines pour crayons de couleur, de feutres, de cires, de paraffines, de lavis, de pâtes pour stylos à bille, de craies, d'agents de lavage et de nettoyage, d'agents d'entretien de chaussures, de produits à base de latex, d'agents de polissage ainsi que pour la coloration de matériaux synthétiques.
